# EUROPÄISCHE PATENTSCHRIFT

(11) **EP 1 815 164 B1**
(45) Veröffentlichungstag und Bekanntmachung des Hinweises auf die Patenterteilung: **22.12.2010**
(21) Anmeldenummer: 05798015.3
(22) Anmeldetag: 18.10.2005
(51) Int. Cl.: F16H 7/08

(54) **HYDRAULISCHER SPANNER FÜR EIN ZUGMITTEL EINES VERBRENNUNGSMOTORS**
HYDRAULIC TENSIONER FOR A TRACTION MEANS OF AN INTERNAL COMBUSTION ENGINE
TENDEUR HYDRAULIQUE POUR MOYEN DE TRACTION D'UN MOTEUR A COMBUSTION

(30) Priorität: 24.11.2004 DE 102004056623
(43) Veröffentlichungstag der Anmeldung: 08.08.2007
(73) Patentinhaber: Schaeffler Technologies GmbH & Co. KG, 91074 Herzogenaurach (DE)
(72) Erfinder: ASSEL, Martin, 91593 Burgbernheim (DE)
(86) Internationale Anmeldenummer: PCT/EP2005/011163
(87) Internationale Veröffentlichungsnummer: WO 2006/056277

(56) Entgegenhaltungen:
- EP-A- 0 908 646
- DE-A1- 4 340 487
- US-A- 5 310 385
- US-A1- 2002 142 871
- US-A1- 2003 216 202

## Beschreibung

### Gebiet der Erfindung

Die Erfindung betrifft einen hydraulischen Spanner zum Spannen eines Zugmittels eines Verbrennungsmotors, insbesondere nach dem Oberbegriff des Patentanspruchs 1.

### Hintergrund der Erfindung

In der DE 43 40 487 A1 ist ein hydraulischer Spanner zum Spannen eines Zugmittels eines Verbrennungsmotors beschrieben, der ein Gehäuse aufweist, in dem ein Hochdruckraum und ein Niederdruckraum angeordnet sind, die mit Öl gefüllt und über ein Kugelventil und einen Drosselspalt verbindbar sind.

Das Lecköl, das bei der oben beschriebenen Lösung aus dem mit sauberem Öl der Erstbefüllung gefüllten Hochdruckraum stammt und das durch den Drosselspalt in den Niederdruckraum fliest, mischt sich dort mit dem mehr oder weniger verschmutzten Motoröl eines Spritzölbehälters. Aus diesem gelangt es über das Kugelventil zurück in den Hochdruckraum und beeinträchtigt unter Umständen die Dichtheit und Funktion des Kugelventils.

### Aufgabe der Erfindung

Der Erfindung liegt die Aufgabe zugrunde, einen hydraulischen Spanner zu schaffen, bei dem die Ölqualität der Erstbefüllung möglichst lange erhalten bleibt.

### Zusammenfassung der Erfindung

Die Aufgabe wird erfindungsgemäß durch die Merkmale des unabhängigen Vorrichtungsanspruchs 1 gelöst.

Da der Niederdruckraum nach außen geschlossen ist, kann das aus dem Drosselspalt austretende Lecköl des Hochdruckraums über den Niederdruckraum, die Leckölleitung und das Kugelventil zurück zum Hochdruckraum zirkulieren. Dabei erfährt das Lecköl keinerlei Berührung mit möglicherweise verschmutztem Fremdöl. Es bleibt dadurch im sauberen Zustand der Erstbefüllung. Erst bei Ölverlust gelangt Fremdöl über das zweite Kugelventil und die Fremdölleitung in den Leckölkreislauf. In diesem Fall wird zwar das Lecköl zunehmend schmutziger, dafür bleibt aber der Spanner auch bei einer Undichtigkeit mit Öl gefüllt und dadurch funktionstüchtig.

Es hat Vorteile, wenn die Ölquelle eine Schmierölpumpe des Verbrennungsmotors ist. Auf diese Weise wird der Niederdruckraum mit dem Förderdruck der Schmierölpumpe beaufschlagt. Dank des in der Fremdölleitung angeordneten anderen Kugelventils kann der Spanner beim Stillstand des Verbrennungsmotors nicht leer laufen. Er steht vielmehr weiterhin unter dem Förderdruck der Ölpumpe. Dadurch bleibt der Spanner auch im Stillstand gefüllt, weist keine Ölverschäumung auf und ist beim nächsten Start funktionsfähig.

Wenn die Ölquelle als oben offener und oberhalb des Niederdruckraums angeordneter Spritzölbehälter ausgebildet ist, entfällt eine gesonderte Ölzufuhrleitung zum Spanner. Dieser ist dadurch völlig unabhängig von der Ölversorgung des Verbrennungsmotors.

Es ist von Vorteil, wenn ein gasgefüllter Ausgleichsbehälter vorgesehen ist, der in Strömungsverbindung mit dem Niederdruckraum steht. Auf diese Weise wird ein Druckanstieg im Niederdruckraum, bedingt durch die Ölverdrängung aus dem Hochdruckraum, beim Eintauchen des Hohlkolbens in die Büchse und durch die temperaturabhängige Ausdehnung des Öls verringert. Außerdem kann sich in dem Ausgleichsbehälter Luft aus verschäumten Öl sammeln. Durch seine Lage oberhalb des Niederdruckraums kann sich der Ausgleichsbehälter nicht mit Öl füllen.

### Kurze Beschreibung der Zeichnungen

Weitere Merkmale der Erfindung ergeben sich aus der folgenden Beschreibung und den Zeichnungen, in denen ein Ausführungsbeispiel der Erfindung schematisch dargestellt ist.

Dabei zeigen:
- Figur 1: einen Querschnitt durch einen hydraulischen Spanner mit Eigenölversorgung und zusätzlicher Fremdölversorgung Über ein anderes Kugelventil durch eine Ölpumpe eines Verbrennungsmotors;
- Figur 2: einen hydraulischen Spanner wie Figur 1, jedoch mit einer Fremdölversorgung über einen Spritzölbehälter.

### Ausführliche Beschreibung der Zeichnungen

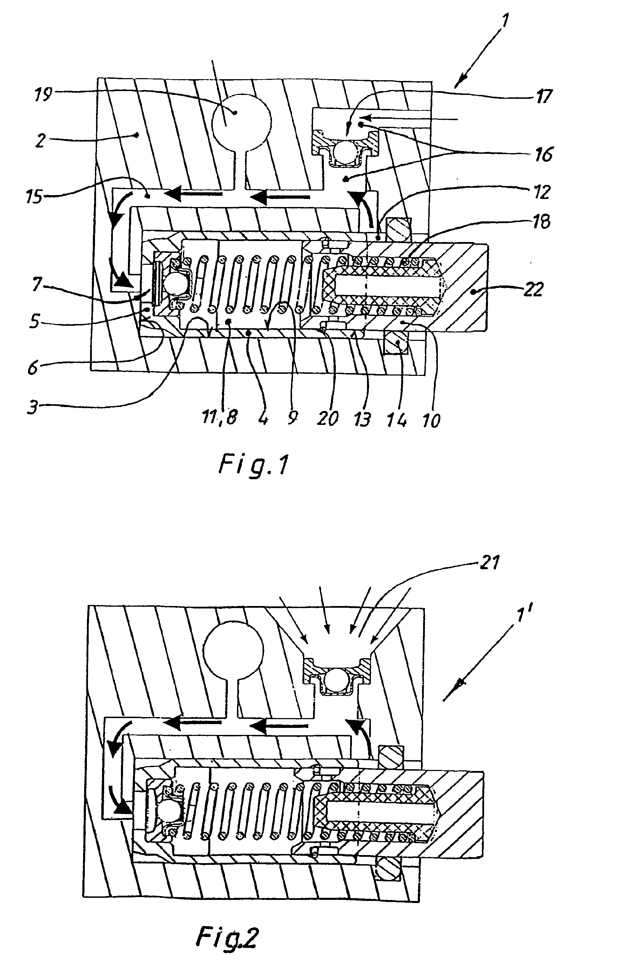

In Figur 1 ist ein hydraulischer Spanner 1 zum Spannen eines Zugmittels eines Verbrennungsmotors dargestellt. Bei dem Zugmittel handelt es sich vorzugsweise um einen Spannriemen.

Der hydraulische Spanner 1 besitzt ein Gehäuse 2 mit einem Sackloch 3, in das eine Büchse 4 eingesetzt ist. Die Büchse 4 weist einen Büchsenboden 5 auf, der in Kontakt mit einem Sacklochboden 6 steht.

Im Büchsenboden 5 ist ein Kugelventil 7 angeordnet, das sich zum Büchseninnern 8 hin öffnet. Eine Innenbohrung 9 der Büchse 4 dient als Führung für einen Hohlkolben 10. Dessen Kolbenboden 22 befindet sich am büchsenfernen Ende des Hohlkolbens 10. Zwischen Innenbohrung 9 und Hohlkolben 10 ist ein Drosselspalt 13 vorgesehen.

Die Büchse 4 und der Hohlkolben 10 umschließen zusammen einen Hochdruckraum 11. In diesem ist eine Spannfeder 18 angeordnet, die zur Vorspannung des Zugmittels dient. Die Hubbewegung des Hohlkolbens 10 ist durch einen axialen Anschlag 20 begrenzt.

Ein Niederdruckraum 12 befindet sich am freien Ende der Büchse 4 bzw. am Ende des Drosselspalts 13. Er ist ringförmig ausgebildet und nach außen durch einen Dichtring 14 abgedichtet.

Der Niederdruckraum 12 ist über eine Leckölleitung 15 und das Kugelventil 7 mit dem Hochdruckraum 11 verbunden.

Von einer nicht dargestellten Ölpumpe des Verbrennungsmotors führt eine Fremdölleitung 16 über ein anderes Kugelventil 17 zur Leckölleitung 15.

Ein gasgefüllter Ausgleichsraum 19 steht ebenfalls mit der Leckölleitung 15 in Verbindung. Der erfindungsgemäße Spanner funktioniert folgendermaßen:
Ausgegangen wird von einem mit sauberem Öl gefüllten Spanner 1. Ölgefüllt sind der Hochdruckraum 11, der Niederdruckraum 12, die Leckölleitung 15, ein Teil des Ausgleichsraums 19 und der Teil der Fremdölleitung 16 zwischen dem anderen Kugelventil 17 und der Leckölleitung 15. Es wird angenommen, dass die Kugelventile 7 und 17 und der Dichtring 14 funktionstüchtig und dicht sind.

Außerdem soll der Verbrennungsmotor abgestellt sein. Dessen Ölpumpe hat im Motorbetrieb die Ölräume des Niederdruckbereichs (= Niederdruckraum 12, Leckölleitung 15, Teil der Fremdölleitung 16 und des Ausgleichsraums 19) mit ihrem Förderdruck aufgepumpt. Dieser Förderdruck bleibt auch im Stillstand des Verbrennungsmotors in den Ölräumen des Niederdruckbereichs bestehen, da das andere Kugelventil 17 ein abfließendes Öl in den leerlaufenden Teil der Fremdölbohrung 16 verhindert. Der Öldruck im Niederdruckbereich kann während des Stillstands durch Ausgleich des hohen Öldrucks im Hochdruckraum 11 über den Drosselspalt 13 sogar noch ansteigen. Das erfindungsgemäße andere Kugelventil 17 hält den Vordruck und damit die Funktionsbereitschaft des Spanners aufrecht.

Nach dem Start des Verbrennungsmotors beginnt durch die Bewegungen des Zugmittels und durch den Einfluss der Wärmedehnung von Verbrennungsmotor und Zugmittel die Hubbewegung des Hohlkolbens 10 und damit die Zirkulation des Öls im Spanner. Beim Eintauchen des Hubkolbens 10 in die Büchse 4 strömt das Öl durch den Drosselspalt 13 in den Niederdruckraum 12 und über die Leckölleitung 15 in den Ausgleichsraum 19.

Beim Ausfahren des Hohlkolbens 10 aus der Büchse 4 fliest das Öl aus dem Ausgleichsraum 19 über die Leckölleitung 15 und das dann offene Kugelventil 7 zurück in den Hochdruckraum 11. Bei diese Ölzirkulation findet Dank des erfindungsgemäßen anderen Kugelventils 17 keine Berührung mit möglicherweise verschmutztem Motoröl statt, so dass die Ölqualität der Erstbefüllung lange erhalten bleibt. Erst wenn der Dichtring 14 verschleißt und undicht ist, wird das dort verlorene Öl über das dann offene andere Kugelventil 17 aus der Fremdölleitung 16 ersetzt. Dadurch wir die Verschmutzung der Erstbefüllung auf das kleinstmögliche Maß beschränkt.

Der Spanner 1' der Figur 2 unterscheidet sich von dem der Figur 1 nur dadurch, dass anstelle der nicht dargestellten Ölpumpe ein oberhalb der Leckölleitung 15 angeordneter Spritzölbehälter 21 tritt, der in Strömungsverbindung mit der Fremdölleitung 16 steht. Dieser macht eine gesonderte Ölversorgungsleitung zum Spanner 1' überflüssig. Er setzt allerdings als Zugmittel eine geschmierte Kette voraus, die wegen des Spritzöls in einem geschlossenen Kettenkasten arbeiten muss.

Bei einer Spritzölversorgung des Spanners 1' entfällt die Möglichkeit eines Vordrucks in dessen Niederdruckbereich. Bis auf diesen Unterschied entspricht die Funktion des Spanners 1' der des Spanners 1.

### Bezugszeichen

- 1, 1': hydraulischer Spanner
- 2: Gehäuse
- 3: Sackloch
- 4: Büchse
- 5: Büchsenboden
- 6: Sacklochboden
- 7: Kugelventil
- 8: Büchseninneres
- 9: Innenbohrung
- 10: Hohlkolben
- 11: Hochdruckraum
- 12: Niederdruckraum
- 13: Drosselspalt
- 14: Dichtring
- 15: Leckölleitung
- 16: Fremdölleitung
- 17: anderes Kugelventil
- 18: Spannfeder
- 19: Ausgleichsraum
- 20: axialer Anschlag
- 21: Spritzölbehälter
- 22: Kolbenboden

## Patentansprüche

1. Hydraulischer Spanner (1, 1') zum Spannen eines Zugmittels eines Verbrennungsmotors, mit einem Gehäuse (2), in dem ein Hochdruckraum (11) und ein Niederdruckraum (12) angeordnet sind, die mit Öl gefüllt und über ein Kugelventil (7) sowie einen Drosselspalt (13) verbindbar sind, **dadurch gekennzeichnet,**
- **dass** das Gehäuse (2) ein Sackloch (3) für eine Büchse (4) aufweist, mit einem Büchsenboden (5), der in Kontakt mit einem Sacklochboden (6) steht;
- **dass** im Büchsenboden (5) das Kugelventil (7) angeordnet ist, das sich zum Büchseninnern (8) hin öffnet;
- **dass** die Innenbohrung (9) der Büchse (4) als Führung für einen Hohlkolben (10) dient, dessen Kolbenboden (22) sich am büchsenfernen Ende des Hohlkolbens (10) befindet;
- **dass** die Büchse (4) und der Hohlkolben (10) zusammen den Hochdruckraum (11) umschließen und der Niederdruckraum (12) am Ende des Drosselspalts (13) angeordnet, vorzugsweise ringförmig ausgebildet und nach außen abgedichtet ist;
- **dass** der Niederdruckraum (12) durch eine Leckölleitung (15) mit dem Kugelventil (7) und durch eine Fremdölleitung (16) mit einer Ölquelle verbunden ist und
- **dass** sich in der Fremdölleitung (16) ein anderes Kugelventil (17) befindet, das in Richtung Ölquelle schließbar ist.

2. Hydraulischer Spanner nach Anspruch 1, **dadurch gekennzeichnet, dass** die Ölquelle eine Schmierölpumpe des Verbrennungsmotors ist.

3. Hydraulischer Spanner nach Anspruch 1, **dadurch gekennzeichnet, dass** ein oben offener und oberhalb des Niederdruckraums (12) angeordneter Spritzölbehälter (21) die Ölquelle ist.

4. Hydraulischer Spanner nach Anspruch 1, **dadurch gekennzeichnet, dass** ein gasgefüllter Ausgleichsbehälter (19) vorgesehen ist, der oberhalb des Niederdruckraum (12) angeordnet ist und in Strömungsverbindung mit dem selben steht.

## Claims

1. Hydraulic tensioner (1, 1') for tensioning a traction mechanism of an internal combustion engine, having a housing (2) in which are arranged a high-pressure space (11) and a low-pressure space (12) which are filled with oil and can be connected by means of a ball valve (7) and a throttle gap (13), **characterized**
- **in that** the housing (2) has a blind hole (3) for a sleeve (4), having a sleeve base (5) which is in contact with a blind-hole base (6);
- **in that** the ball valve (7) is arranged in the sleeve base (5), which ball valve (7) opens towards the sleeve interior (8);
- **in that** the inner bore (9) of the sleeve (4) serves as a guide for a hollow piston (10) whose piston head (22) is situated on that end of the hollow piston (10) which is remote from the sleeve;
- **in that** the sleeve (4) and the hollow piston (10) together enclose the high-pressure space (11), and the low-pressure space (12) is arranged at the end of the throttle gap (13), is preferably of angular design and outwardly sealed off;
- **in that** the low-pressure space (12) is connected by means of a leakage oil line (15) to the ball valve (7) and by means of an external oil line (16) to an oil source, and
- **in that** another ball valve (17) is situated in the external oil line (16), which other ball valve (17) can be closed off in the direction of the oil source.

2. Hydraulic tensioner according to Claim 1, **characterized in that** the oil source is a lubricating oil pump of the internal combustion engine.

3. Hydraulic tensioner according to Claim 1, **characterized in that** the oil source is a spray oil tank (21) which is open at the top and is arranged above the low-pressure space (12).

4. Hydraulic tensioner according to Claim 1, **characterized in that** a gas-filled equalizing chamber (19) is provided which is arranged above the low-pressure space (12) and is flow-connected to the latter.

## Revendications

1. Tendeur hydraulique (1, 1') pour tendre un moyen de traction d'un moteur à combustion interne, comprenant un boîtier (2) dans lequel sont disposés un espace haute pression (11) et un espace basse pression (12), qui sont remplis d'huile et qui peuvent être connectés par le biais d'une soupape sphérique (7), ainsi qu'un interstice d'étranglement (13),
**caractérisé en ce que**
- le boîtier (2) présente un trou borgne (3) pour une douille (4), avec un fond de douille (5) qui est en contact avec un fond du trou borgne (6) ;
- la soupape sphérique (7) est disposée dans le fond de douille (5) et s'ouvre vers l'intérieur de la douille (8) ;
- l'alésage interne (9) de la douille (4) sert de guidage pour un piston creux (10) dont le fond de piston (22) se situe à l'extrémité du piston creux (10) éloignée de la douille ;
- la douille (4) et le piston creux (10) entourent ensemble l'espace haute pression (11), et l'espace basse pression (12) est disposé à l'extrémité de l'interstice d'étranglement (13), de préférence est réalisé sous forme annulaire et est rendu étanche vers l'extérieur ;
- l'espace basse pression (12) est connecté par une conduite de fuite d'huile (15) à la soupape sphérique (7) et par une conduite d'huile extérieure (16) à une source d'huile, et
- la conduite d'huile extérieure (16) se trouve dans une autre soupape sphérique (17) qui peut être fermée dans la direction de la source d'huile.

2. Tendeur hydraulique selon la revendication 1, **caractérisé en ce que** la source d'huile est une pompe à huile de lubrification du moteur à combustion interne.

3. Tendeur hydraulique selon la revendication 1, **caractérisé en ce qu'**un récipient d'huile de pulvérisation (21) ouvert en haut et disposé au-dessus de l'espace basse pression (12) est la source d'huile.

4. Tendeur hydraulique selon la revendication 1, **caractérisé en ce que** l'on prévoit un récipient de compensation rempli de gaz (19), qui est disposé au-dessus de l'espace basse pression (12) et qui est en liaison d'écoulement avec celui-ci.
